# EUROPEAN PATENT SPECIFICATION

(11) **EP 0 363 097 B1**
(45) Date of publication and mention of the grant of the patent: **16.03.1994**
(21) Application number: 89309975.4
(22) Date of filing: 29.09.1989
(51) Int. Cl.: C03B 23/035

(54) **Method of shaping sheet glass**
Verfahren zum Biegen von Glasscheiben
Procédé de façonnage d'une feuille de verre

(30) Priority: 04.10.1988 JP 250454/88
(43) Date of publication of application: 11.04.1990
(73) Proprietor: NIPPON SHEET GLASS CO. LTD., Chuo-ku Osaka-shi Osaka-fu (JP)
(72) Inventor: Yuki, Kazunori c/o Nippon Sheet Glass Co., Ltd., Osaka-chi Osaka (JP)
(74) Representative: Pedder, James Cuthbert

(56) References cited:
- DE-A- 3 640 892
- US-A- 4 280 828
- PATENT ABSTRACTS OF JAPAN, unexamined applications, C field, vol. 11, no. 63,February 26, 1987; THE PATENT OFFICE JAPANESE GOVERNMENT page 67 C 406

## Description

The present invention relates to a method of shaping a curved sheet of glass for use as an automotive windshield.

Heretofore, there are known gravity and pressing processes for shaping sheets of glass to curved form.

According to the gravity process, a sheet of glass is placed on a ring mold so that the peripheral edge of the glass sheet is softened with heat to the extent that it is deformed by gravity to a shape complementary to the shape of the ring mold. The pressing process employs a pair of upper and lower molds or a pair of lateral molds for bending a softened sheet of glass therebetween.

The gravity process cannot bend a glass sheet to a considerably complex shape because only the peripheral edge of the glass sheet is held on the ring mold. Bent glass sheets formed by the gravity process tend to vary in configuration.

The pressing process allows more uniformly shaped glass sheets. However, if a sheet must be highly softened, and pressed by the molds under stronger forces. This is disadvantageous in that the glass tends to stick to the molds and cannot easily be separated from the molds, and the shaped glass sheet may have strains.

One variation of such a pressing process, using a single mold and a hot blast, is shown in DE-A1-3 640 892. In this arrangement, a preheated glass sheet is transported above a forming mold by a suction plate. The glass sheet is then released and drops onto the forming mold, the glass sheet being caused to take up the shape of the mold by means of a hot air blast. Such an arrangement can be satisfactory where a simple and relatively lightly curved result is required, but with more complex shapes, difficulties may arise due to the complexity of the finished glass object and the need, in many cases, for accuracy of finish.

Thus, in this situation there is again a tendency for the glass to stick to the mold and/or for the glass to be undesirably stressed, and even to exhibit cracks, making it unsuitable for certain applications.

In view of the foregoing problems of the conventional methods of shaping glass, it is an object of the present invention to provide a method of shaping a sheet of glass easily and efficiently to uniform shape such that glass sheets of complex shape can be produced without any substantial error or difference in shape.

According to the present invention, there is provided a method of shaping a glass sheet, comprising the steps of supporting at least a peripheral edge of a glass sheet to be shaped on a ring mold, moving the ring mold into a heating furnace until the glass sheet is positioned directly above a shaping mold in the heating furnace, heating the glass sheet until the glass sheet on the ring mold is softened and deformed to a shape complimentary to the ring mold, lifting the shaping mold with respect to the ring mold to transfer the glass sheet from the ring mold onto the shaping mold and attracting the glass sheet against a shaping surface of the shaping mold to finally shape the glass sheet complementarily to the shaping surface, lowering the shaping mold with respect to the ring mold to transfer the shaped glass sheet from the shaping mold onto the ring mold and moving the ring mold out of the heating furnace.

After the glass sheet has been shaped by the shaping mold, air may be ejected from the shaping surface of the shaping mold toward the glass sheet so that the glass sheet can easily be separated from the shaping surface.

The invention will now be described in greater detail, by way of example, with reference to the drawings, in which :-
FIG. 1 is a schematic elevational view, partly in cross section, of a shaping apparatus for carrying out a method of shaping glass according to a preferred embodiment of the present invention;
FIG. 2 is an enlarged cross-sectional view taken along line II - II of FIG. 1, with a ring mold which supports a sheet of glass being placed in a heating furnace;
FIG. 3 is a fragmentary cross-sectional view of the heating furnace in which the glass sheet supported on the ring mold is placed over a shaping mold;
FIG. 4 is a fragmentary cross-sectional view of the heating furnace in which the glass sheet that has been transferred from the ring mold onto the shaping mold is being shaped by being attracted to a shaping surface of the shaping mold;
FIG. 5 is a schematic elevational view, partly in cross section, of the shaping apparatus in which the shaped glass sheet is being quenched by a quenching device; and
FIG. 6 is a schematic elevational view, partly in cross section, of a shaping apparatus for carrying out a method of shaping sheet glass in accordance with another embodiment of the present invention.

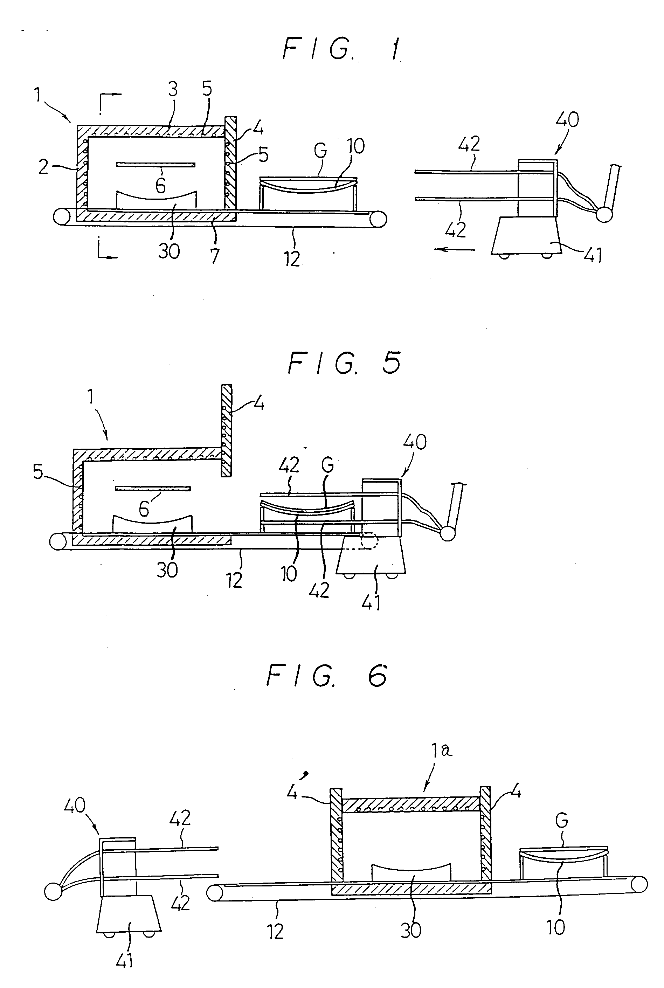

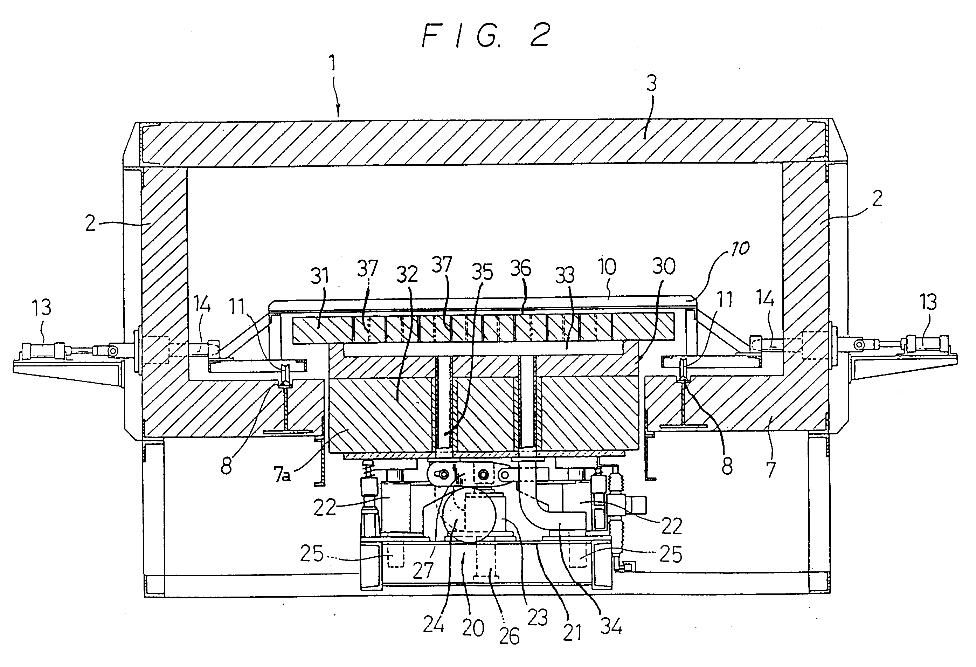

As shown in FIG. 1, a shaping apparatus for shaping a sheet of glass comprises a heating furnace 1 as a heating means for heating a sheet of glass G, a shaping mold 30 in the heating furnace 1, a lifting/lowering mechanism 20 (shown only in fig. 2) for vertically moving the shaping mold 30 in the heating furnace 1, a ring mold 10 for supporting at least the peripheral edge of the glass sheet G, a feed means including a chain 12 for feeding the ring mold 10 into and out of the heating furnace 1, and a quenching device 40 for quenching the shaped glass sheet G.

The heating furnace 1 is constructed of three side walls 2, a furnace bed 7, a ceiling wall 3, and a vertically movable door 4. With the door 4 lifted, the ring mold 10 can be moved into and out of the heating furnace 1 by the chain 12. A number of heaters 5 are attached to the inner surfaces of the wall components of the heating furnace 1. A local area heating heater 6 is disposed in the heating furnace 1 above the shaping mold 30.

FIG. 2 shows the heating furnace 1 with the ring mold 10 placed therein. A pair of spaced rails 8 is mounted on the furnace bed 7, and castors 11 rotatably supported on a lower portion of the ring mold 10 are positioned respectively on the rails 8 for rolling engagement therewith. The chain 12 (FIG. 1) is attached to the ring mold 30 and trained around sprockets, at least one of which is coupled to a motor (not shown). Therefore, the ring mold 10 can smoothly be taken into and out of the heating furnace 1 by energizing the motor. Two cylinder actuator units 13 (FIG. 2) are mounted on the outer surfaces of the two opposite side walls 2, and coupled to respective positioning pins 14. The positioning pins 14 are axially movable by the respective cylinder actuator units 13 into engagement with the ring mold 10 for thereby positioning the ring mold 10 in the heating furnace 1.

The furnace bed 7 has a separate bed portion 7a which is vertically movable by the lifting/lowering mechanism 20. The shaping mold 30 is mounted on the separate bed portion 7a.

The lifting/lowering mechanism 20 comprises a support frame 21, a pair of guides 22 and a guide 23 which are mounted on the support frame 21, and a motor 24 mounted on the support frame 21. Guide rods 25 extending downwardly from the lower surface of the separate bed 7a are slidably fitted in the guides 22, respectively. A rod 26 which is vertically movable by the motor 24 is slidably fitted in the guide 23. The rod 26 has an upper end fixed to an intermediate portion of an arm 27 pivotally coupled to the support frame 21. The arm 27 has an end joined to the lower surface of the separate bed 7a. When the motor 24 is energized, the rod 26 is vertically moved to swing the arm 27 for thereby vertically moving the separate bed 7a and the shaping mold 30. The lifting/lowering mechanism 20 may comprise a cylinder actuator unit, rather than the illustrated assembly.

The shaping mold 30 has upper and lower mold members 31, 32 with a space 33 defined therebetween. A pipe 34 extending through the separate bed 7a and connected to an evacuating unit (not shown), and another pipe 35 extending through the separate bed 7a and connected to a pressurized air source (not shown) open into the space 33. The upper mold member 31 is made of a ceramic material such as CaO-SiO₂-Al₂O₃ or fused silica. The upper mold member 31 has an upper surface 36 which has been shaped by a numerically controlled machine in complementary relation to a final product shape. The upper shaping surface 36 is held in communication with the space 33 through small holes 37 defined in the upper mold member 31. The small holes 37 have a diameter of about 3 mm each, and are spaced about 60 mm on the upper shaping surface 36. A woven fabric or felt comprising alumina fibers, silica fibers, glass fibers, and metal fibers is attached to the upper shaping surface 36 except the open ends of the small holes 37, so that no glass sheet will adhere to the upper shaping surface 36. The lower mold member 32 is made of fused silica.

As shown in FIG. 1, the quenching device 40 is disposed near the heating furnace 1. The quenching device 40 is mounted on a mobile carriage 41 and has two upper and lower quenching air ejector nozzles 42 connected to a pressurized air source. As described later on, a shaped glass sheet G taken out of the heating furnace 1 is inserted and quenched between the nozzles 42.

A process of shaping a glass sheet on the shaping apparatus thus constructed will be described below.

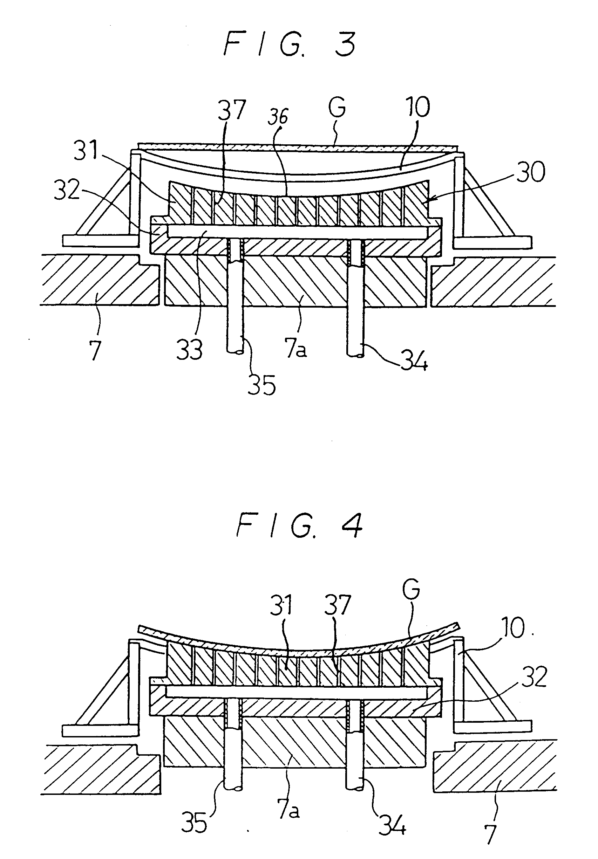

As shown in FIG. 1, the peripheral edge of a flat glass sheet G is placed on the ring mold 10. Then, the door 4 of the heating furnace 1 is opened, and the chain 12 is driven to move the ring mold 10 into the heating furnace 1. When the ring mold 10 has reached a predetermined position in the heating furnace 1, the ring mold 10 is secured in position by the positioning pins 14. At this time, the glass sheet G is positioned directly above the shaping surface 36 of the shaping mold 30 as shown in FIG. 3.

Thereafter, the heating furnace 1 is energized to start heating the glass sheet G, and the quenching device 40 is moved toward the heating furnace 1 in preparation for quenching a shaped glass sheet. When the glass sheet G is softened with heat and starts being deformed into a shape complementary to the shape of the ring mold 10 (preliminary shaping), the shaping mold 30 is lifted by the lifting/lowering mechanism 20 until the preliminarily shaped glass sheet G is received from the ring mold 10 onto the shaping surface 36 of the shaping mold 30 as shown in FIG. 4. At the same time that the shaping mold 30 is elevated, the space 33 in the shaping mold 30 is evacuated to a vacuum ranging from - 20 mmAq. to - 300 mmAq. through the pipe 34. Air between the lower surface of the glass sheet G and the shaping surface 36 of the shaping mold 30 is removed through the small holes 37 into the space 33, thus attracting the glass sheet G against the shaping surface 36 under suction. As a result, the glass sheet G placed on the shaping surface 36 is finally shaped by the shaping surface 36 as well as by gravity. According to the method of the present invention, the glass sheet G is shaped primarily by the suction, it can accurately be curved or bent even where it should be bent deeply. While the glass sheet G is being heated and shaped, it is preferable to introduce hot air into the heating furnace 1 from an external source or circulate hot air in the heating furnace 1 with a fan disposed therein, so that various portions, especially the face and back, of the glass sheet G will be uniformly heated without any substantial temperature difference. The local area heating heater 6 disposed upwardly of the glass sheet G is also effective in heating and softening the glass sheet G efficiently and uniformly without substantial temperature differences on the glass sheet G.

After the glass sheet G has been shaped, the shaping mold 30 is lowered by the lifting/lowering mechanism 20, and air is supplied into the space 33 in the shaping mold 30 through the pipe 35 to pressurize the space 33 up to + 100 mmAq. or less. Therefore, air is ejected out of the small holes 37 toward the glass sheet G, so that the glass sheet G will easily be separated from the shaping surface 36. Then, the shaping mold 30 is lowered to transfer the glass sheet G back onto the ring mold 10.

Subsequently, the chain 12 is driven to move the ring mold 10 with the glass sheet G placed thereon out of the heating furnace 1 toward the quenching device 40 as shown in FIG. 5. The face and back of the shaped glass sheet G are then quenched by air ejected from the nozzles 42.

Thereafter, the quenching device 40 is retracted to the right (FIG. 5), and the glass sheet G is fed to a next process either together with or independently of the ring mold 10.

FIG. 6 shows a shaping apparatus for carrying out a shaping method according to another embodiment of the present invention. The shaping apparatus shown in FIG. 6 has a pair of opposite vertically movable doors 4, 4′ on the opposite sides of a heating furnace 1a. A glass sheet G to be shaped is fed into the heating furnace 1a through one of the doors 4′, and, after having been shaped, it is removed from the heating furnace 1a through the other door 4′. The shaped glass sheet G is then quenched by the quenching device 40 which has been brought in front of the door 4′ at least while the glass sheet G is being heated and shaped. Since the glass sheet G is delivered only in one direction through the heating furnace 1a toward the quenching device 40, a plurality of glass sheets G can successively be shaped and quenched.

The heating furnace 1a shown in FIG. 6 can shape only one glass sheet G at a time. However, a long tunnel-shaped continuous heating furnace having inlet and outlet openings in its opposite ends, e.g., a continuous heating furnace in which the heating temperature is gradually increased from the inlet opening toward a central region and gradually reduced from the central region toward the outlet opening, with the shaping mold 30 and the lifting/lowering mechanism 20 being located in the central region, may be employed in the present invention. The continuous heating furnace is more efficient since a plurality of glass sheets G can successively be introduced in a row into the heating furnace.

Glass sheets G can be shaped more effectively by employing an auxiliary upper shaping mold in combination with the shaping mold 30 which is used as a lower shaping mold.

With the present invention, as described above, since a glass sheet is bent under suction as well as by gravity, the glass sheet can efficiently be shaped even if it should be bent to a complex configuration, and glass sheets shaped by the method of the present invention do not suffer from substantial differences in shape. While a glass sheet is being shaped by the shaping mold, the peripheral edge of the glass sheet is separated from the ring mold. Consequently, inasmuch as the peripheral edge of the glass sheet is not pressed against the ring mold, no trace or mark of the ring mold is left on the glass sheet.

Although there have been described what are at present considered to be the preferred embodiments of the present invention, it will be understood that. the invention may be embodied in other specific forms without departing from the essential characteristics thereof. The present embodiments are therefore to be considered in all aspects as illustrative, and not restrictive. The scope of the invention is indicated by the appended claims rather than by the foregoing description.

## Claims

1. A method of shaping a glass sheet (G), comprising the steps of:
(a) supporting at least a peripheral edge of a glass sheet (G) to be shaped on a ring mold (10);
(b) moving said ring mold (10) into a heating furnace (1) until the glass sheet (G) is positioned directly above a shaping mold (30) in said heating furnace (1);
(c) heating the glass sheet (G) until the glass sheet (G) on the ring mold (10) is softened and deformed into a shape complementary to said ring mold (10) so as to gradually and preliminarily shape the glass sheet (G);
(d) lifting said shaping mold (30) with respect to said ring mold (10) to transfer the glass sheet (G) from said ring mold (10) onto said shaping mold (30) and attracting the glass sheet (G) against a shaping surface (36) of said shaping mold (30) to finally shape the glass sheet (G) complementarily to said shaping surface (36);
(e) lowering said shaping mold (30) with respect to said ring mold (10) to transfer the shaped glass sheet (G) from said shaping mold (30) onto said ring mold (10); and
(f) moving said ring mold (10) out of said heating furnace (1).

2. A method according to claim 1, wherein said step (d) comprises the step of discharging air from between the lower surface of the glass sheet (G) transferred on the shaping surface (36) of said shaping mold (30) and said shaping surface (36), through said shaping mold (30).

3. A method according to claim 1 or 2, wherein said step (e) includes the step of ejecting air from said shaping surface (36) toward said glass sheet (G) to separate the shaped glass sheet (G) from said shaping surface (36).

4. A method according to claim 1, 2 or 3, wherein said step (b) includes the step of positioning a quenching device (40) near an outlet of said heating furnace (1) from which the shaped glass sheet (G) is moved out of the heating furnace (1), and wherein said step (f) includes the step of quenching, with said quenching device (40), the shaped glass sheet (G) moved out of the heating surface (1).

5. A method according to any one of claims 1 to 4, wherein at least said steps (c) and (d) include the step of circulating hot air in the heating furnace (1) to uniformize the temperatures of various portions of the glass sheet (G).

6. A method according to any one of claims 1 to 4, wherein at least said steps (c) and (d) include the step of uniformly heating and softening the glass sheet (G) with a heater (6) disposed above the glass sheet (G) in said heating furnace (1).

7. A method according to any one of claims 1 to 6, wherein said step (b) comprises the step of moving said glass sheet (G) into said heating furnace (1) through a first door (4) thereof, and said step (f) comprises the step of moving the shaped glass sheet (G) from said heating furnace (1) through a second door (4) opposite to said first door (4), said method further including the step of: positioning of the quenching device (40) for quenching the shaped glass sheet (G) moved out of said heating furnace, in front of said second door(4).

## Patentansprüche

1. Verfahren zum Gestalten einer Glasscheibe (G), umfassend die Schritte:
(a) Stützen wenigstens eines Umfangsrandes einer Glasscheibe (G), die auf einer Ring-Form (10) gestaltet werden soll;
(b) Hineinbewegen der Ring-Form (10) in einen Heizofen (1), bis die Glasscheibe (G) unmittelbar über einer Gestaltungs-Form (30) im Heizofen (1) angeordnet ist;
(c) Heizen der Glasscheibe (G), bis die Glasscheibe (G) auf der Ring-Form (10) erweicht und in eine zur Ring-Form (10) komplementäre Gestalt verformt wird, um die Glasscheibe (G) allmählich und vorbereitend zu gestalten;
(d) Anheben der Gestaltungs-Form (30) bezüglich der Ring-Form (10), um die Glasscheibe (G) von der Ring-Form (10) auf die Gestaltungs-Form (30) überzuführen, und Anziehen der Glasscheibe (G) gegen eine Gestaltungsfläche (36) der Gestaltungs-Form (30), um schließlich die Glasscheibe (G) komplementär zur Gestaltungsfläche (36) zu gestalten;
(e) Ansenken der Gestaltungs-Form (30) bezüglich der Ring-Form (10), um die gestaltete Glasscheibe (G) von der Gestaltungs-Form (30) auf die Ring-Form (10) überzuführen; und
(f) Herausbewegen der Ring-Form (10) aus dem Heizofen (1).

2. Verfahren nach Anspruch 1, bei welchem der Schritt (d) den Schritt umfaßt: Auslassen von Luft von zwischen der unteren Fläche der auf die Gestaltungsfläche (36) der Gestaltungs-Form (30) überführten Glasscheibe (G) und der Gestaltungsfläche (36) durch die Gestaltungs-Form (30) hindurch.

3. Verfahren nach Anspruch 1 oder 2, bei welchem der Schritt (e) den Schritt umfaßt: Ausstoßen von Luft von der Gestaltungsfläche (36) zu der Glasscheibe (G) hin, um die gestaltete Glasscheibe (G) von der Gestaltungsfläche (36) zu trennen.

4. Verfahren nach Anspruch 1, 2 oder 3, bei welchem der Schritt (b) den Schritt umfaßt: Anordnen einer Abschreckvorrichtung (40) nahe eines Auslasses des Heizofens (1), durch welchen die gestaltete Glasscheibe (G) aus dem Heizofen (1) herausbewegt wird, und bei welchem der Schritt (f) den Schritt umfaßt: Abschrecken der aus dem Heizofen (1) herausbewegten gestalteten Glasscheibe (G) mit der Abschreckvorrichtung (40).

5. Verfahren nach einem der Ansprüche 1 bis 4, bei welchem wenigstens die Schritte (c) und (d) den Schritt umfassen: Zirkulieren heißer Luft im Heizofen (1), um die Temperaturen verschiedener Abschnitte der Glasscheibe (G) aneinander anzugleichen.

6. Verfahren nach einem der Ansprüche 1 bis 4, bei welchem wenigstens die Schritte (c) und (d) Gen Schritt umfassen: gleichmäßiges Erwärmen und Erweichen der Glasscheibe (G) mit einem Heizer (6), der über der Glasscheibe (G) im Heizofen (1) angeordnet ist.

7. Verfahren nach einem der Ansprüche 1 bis 6, bei welchem der Schritt (b) den Schritt umfaßt: Hineinbewegen der Glasscheibe (G) in den Heizofen (1) durch eine erste Tür (4) desselben, und der Schritt (f) den Schritt umfaßt: Herausbewegen der gestalteten Glasscheibe (G) aus dem Heizofen (1) durch eine der ersten Tür (4) gegenüber angeordnete zweite Tür (4'), wobei das Verfahren ferner den Schritt umfaßt: Anordnen der Abschreckvorrichtung (40) zum Anschrecken der aus dem Heizofen herausbewegten gestalteten Glasscheibe (G) vor der zweiten Tür (4').

## Revendications

1. Procédé de mise en forme de feuille de verre (G), comportant les étapes consistant à :
(a) supporter au moins un bord périphérique d'une feuille de verre (G) à former sur un moule en anneau(10),
(b) déplacer le moule en anneau (10) dans un four de chauffage (1) jusqu'à ce que la feuille de verre (G) soit positionnée directement au-dessus d'un moule de mise en forme (30) situé dans le four de chauffage (1),
(c) chauffer la feuille de verre (G) jusqu'à ce que la feuille de verre située sur le moule en anneau (10) soit ramollie et déformée vers une forme complémentaire du moule en anneau (10) pour ainsi mettre en forme de manière préliminaire et graduelle la feuille de verre (G),
(d) élever le moule de mise en forme (30) par rapport au moule en anneau (10) pour transférer la feuille de verre (G) depuis le moule en anneau (10) jusque sur le moule de mise en forme (30) et attirer la feuille de verre (G) contre une surface (36) de mise en forme du moule de mise en forme (30) pour en définitive mettre en forme la feuille de verre de manière complémentaire à la surface (36) de mise en forme,
(e) abaisser le moule de mise en forme (30) par rapport au moule en anneau (10) pour transférer la feuille de verre formée (G) du moule de mise en forme (30) sur le moule en anneau (10), et
(f) déplacer le moule en anneau (10) à l'extérieur du four de chauffage (1).

2. Procédé selon la revendication 1, dans lequel ladite étape (d) comporte l'étape consistant à décharger de l'air à partir d'une position entre la surface inférieure de la feuille de verre (G) transférée sur la surface de mise en forme (36) dudit moule de mise en forme (30) et ladite surface de mise en forme (36), à travers ledit moule de mise en forme (30).

3. Procédé selon la revendication 1 ou 2, dans lequel ladite étape (e) comporte l'étape consistant à éjecter l'air à partir de ladite surface de mise en forme (36) vers ladite feuille de verre (G) pour séparer la feuille de verre mise en forme (G) de ladite surface de mise en forme (36).

4. Procédé selon la revendication 1, 2 ou 3, dans lequel ladite étape (b) comporte l'étape consistant à positionner un dispositif de trempage (40) à proximité d'une sortie dudit four de chauffage (1) à partir de laquelle la feuille de verre mise en forme (G) est déplacée à l'extérieur du four de chauffage (1), et dans lequel ladite étape (f) comporte l'étape consistant à tremper, à l'aide dudit dispositif de trempage (40), la feuille de verre mise en forme (G) déplacée à l'extérieur du four de chauffage (1).

5. Procédé selon l'une quelconque des revendications 1 à 4, dans lequel au moins lesdites étapes (c) et (d) comportent l'étape consistant à mettre en circulation de l'air chaud dans le four de chauffage (1) pour uniformiser les températures des diverses parties de la feuille de verre (G).

6. Procédé selon l'une quelconque des revendications 1 à 4, dans lequel au moins lesdites étapes (c) et (d) comportent l'étape consistant à chauffer et ramollir de manière uniforme la feuille de verre (G) à l'aide d'un réchauffeur (6) disposé au-dessus de la feuille de verre (G) dans ledit four de chauffage (1).

7. Procédé selon l'une quelconque des revendications 1 à 6, dans lequel ladite étape (b) comporte l'étape consistant à déplacer ladite feuille de verre (G) dans ledit four de chauffage (1) à travers une première porte (4) de celui-ci, et ladite étape (f) comporte l'étape consistant à déplacer la feuille de verre mise en forme (G) à partir dudit four de chauffage (1) à travers une seconde porte (4) opposée à ladite première porte (4), ledit procédé comportant en outre l'étape consistant à positionner le dispositif de trempage (40) en face de ladite seconde porte (4) pour tremper la feuille de verre mise en forme (G) déplacée a l'extérieur dudit four de chauffage.
